# EUROPÄISCHE PATENTSCHRIFT

(11) **EP 1 265 576 B1**
(45) Veröffentlichungstag und Bekanntmachung des Hinweises auf die Patenterteilung: **11.05.2016**
(21) Anmeldenummer: 01925489.5
(22) Anmeldetag: 20.03.2001
(51) Int. Cl.: H02P 6/00

(54) **ELEKTROMOTORISCHE ANTRIEBSEINHEIT FÜR BETTEN UND TISCHE**
ELECTROMOTIVE DRIVE UNIT FOR BEDS AND TABLES
UNITE D'ENTRAINEMENT A MOTEUR ELECTRIQUE POUR LITS ET TABLES

(30) Priorität: 20.03.2000 DE 20005049 U
(43) Veröffentlichungstag der Anmeldung: 18.12.2002
(73) Patentinhaber: DewertOkin GmbH, 32278 Kirchlengern (DE)
(72) Erfinder: WEHMEYER, Klaus, 32051 Herford (DE); SCHRÖDER, Thomas, 49324 Melle (DE); VIERMANN, Thomas, 32584 Löhne (DE); BOKÄMPER, Ralf, 32312 Lübbecke (DE)
(74) Vertreter: Dantz, Jan Henning
(86) Internationale Anmeldenummer: PCT/EP2001/003150
(87) Internationale Veröffentlichungsnummer: WO 2001/070165

(56) Entgegenhaltungen:
- EP-A- 0 887 915
- DE-A- 19 647 836
- DE-C- 19 733 581
- US-A- 3 697 846
- US-A- 3 814 414
- US-A- 5 486 747
- US-A- 5 515 561

## Beschreibung

Die Erfindung betrifft eine elektromotorische Antriebseinheit für wenigstens ein verstellbares Bauteil eines Möbels, die mit wenigstens einem mittels einer Steuereinheit steuerbaren Antriebsmotor und einer Auswerteeinheit ausgestattet ist, wie in der DE-C-19733581 offenbart wird.

Die in Frage kommende elektromotorische Antriebseinheit ist vorzugsweise ein Linearantrieb oder ein Rotationsantrieb, der zur Verstellung von beweglichen Bauteilen eines Möbels verwendet wird. Sofern die elektromotorische Antriebseinheit ein Linearantrieb ist, kann er u.a. auch zur Höhenverstellung der Tischplatte eines Tisches verwendet werden. Die zu verstellenden Bauteile sind durch Gegenstände belastet, wie z.B. einen PC, Bürogeräte, Akten o.dgl. Die Verstellung erfolgt, um beispielsweise die Höhe einer Tischplatte an die Größe von wechselweise am Arbeitstisch arbeitenden Personen anzupassen. Die Leistung des Motors ist auf die maximale Belastung des zu verstellenden Bauteils ausgelegt. Im Bedarfsfall können auch zwei oder mehrere Motore zur Verstellung des Bauteils, beispielsweise der Tischplatte benötigt werden.

Bei der Höhenverstellung der Tischplatte ist es insbesondere beim Aufwärtsfahren unvermeidbar, daß die Tischplatte gegen einen als Anschlag wirkenden ortsfesten Gegenstand fährt. Dadurch könnte nicht nur dieser Gegenstand und auch die Tischplatte beschädigt werden, sondern auch die Bauteile des elektromotorischen Antriebes, beispielsweise auch die Wicklungen des Antriebsmotors, da in einem solchen Fall die Stromstärke des Motorstromkreises sprunghaft und erheblich ansteigt. Obwohl der Antriebsmotor dann ein entsprechendes Geräusch von sich gibt, ist dies für den Benutzer nicht unbedingt wahrnehmbar, da beispielsweise in einem Büro oder in einem sonstigen Arbeitsraum starke Nebengeräusche vorhanden sind.

Weiterhin ist es vorteilhaft, daß die Bewegung des Tisches beim Anfahren sanft einsetzt und beim Anhalten sanft abnimmt (Soft-Start/Stop), wobei alle dazwischen auftretenden Bewegungsabläufe unabhängig von der Belastung sind. Die Begrenzung der Hubwege kann durch mechanische Anschläge, interne im Antrieb befindliehe und/oder zusätzliche externe Endschalter, sowie auch durch zusätzlich frei programmierbare elektronische Endschalter erfolgen. Bei Verwendung dieses Möbels z.B. von Personen unterschiedlicher Größe ist es außerdem zweckmäßig, die dazu passenden Arbeitshöhen (Memoryfunktion), sowie die dazu notwendigen Justiervorgänge, beispielsweise auch bei Verlust der sog. Referenzpunkte auf einfachste Weise einstellen.

In der DE 196 47 836 A1 wird ein Steuerungssystem mit einer sogenannten Erstfehlersicherheit beschrieben. Danach soll beim Auftreten eines beliebigen ersten Fehlers jede Art von einer nicht näher erläuterten Gefährdung ausgeschlossen werden. Im Bedarfsfall soll sogar das gesteuerte Gerät gebrauchsunfähig gemacht werden. Dieses Steuerungssystem ist so ausgelegt, dass der Benutzer erkennen kann, wenn Bauteile nicht mehr funktionsfähig sind, dies gilt insbesondere für elektrische Kontakte.

Das Steuerungssystem gemäß dieser Literaturstelle besteht aus drei Komponenten, nämlich einer Befehlseingabe in Verbindung mit einer integrierten Verarbeitung von Befehlen, wobei die Eingabeelemente in eine Bedienungstastatur oder in mehrere Bedienungstastaturen eingearbeitet sind. Ferner enthält das Ansteuerungssystem eine die eingegebenen Befehle weiterverarbeitende Elektronik in Form einer Mikrocontrollersteuerung und darüber hinaus noch Leistungsstellglieder, die den Motorstrom der Lineareinheit schalten. Dies sind beispielsweise Relais-LeistungsTransistoren und ähnliche Bauteile.

Der Erfindung liegt die Aufgabe zugrunde, eine elektromotorische Antriebseinheit der eingangs näher beschriebenen Art in einfachster und preiswertester Art so zu gestalten, daß eine möglicherweise bis zum Stillstand führende Überlastung des Antriebsmotors bzw. der Antriebsmotore vermieden wird und alle aufgeführten Aufgaben erfüllt werden.

Die gestellte Aufgabe wird gelöst, indem der Antriebsmotor oder bestimmte Antriebsmotore jeweils eine Meßeinrichtung zur Messung der vom jeweiligen Antriebsmotor aufgenommenen Stromstärke und/oder der vom jeweiligen Antriebsmotor abgegebenen Drehzahl aufweisen, und dass eine Auswerteeinheit derart vorgesehen ist, dass beim Abweichen eines Wertes von einem vorgegebenen Wert derart regelnd in den Verstellvorgang eingegriffen wird, dass der Verstellvorgang abgebrochen, unterbrochen oder für die Dauer einer vorgegebenen Zeit umgekehrt wird.

Es ist allgemein bekannt, daß beim Einschalten eines Motors, beispielsweise die Stromstärke deutlich höher ist als nach einer bestimmten Zeit nach dem Anlaufen. Dieser Vorgang bleibt unberücksichtigt. Während des Hochfahrens beispielsweise einer Tischplatte bleibt die Stromstärke konstant, oder sie schwankt in engen Grenzen. Fährt jetzt beispielsweise die Tischplatte gegen einen ortsfesten Gegenstand oder gegen einen Gegenstand, der sich mit einem relativ hohen Kraftaufwand bewegen läßt, steigt die Stromstärke sprunghaft und deutlich an. In der Auswerteeinrichtung wird die Stromstärke beim Normalbetrieb mit der jetzigen Stromstärke verglichen, und beim Überschreiten eines bestimmten Verhältnisses oder beim Überschreiten einer vorgegebenen Stromstärke wird ohne Vergleich regelnd in den Verstellvorgang eingegriffen, so daß die Überbelastung des Antriebsmotors unmittelbar nach dem Anstieg der Stromstärke aufgehoben wird. Um regelnd in den Verstellvorgang einzugreifen, sollte die Stromstärke jedoch deutlich höher sein, da es durchaus passieren kann, daß während eines Verstellvorganges eine zusätzliche Last auf die Tischplatte gelegt wird, wodurch jedoch keine Überbelastung des Antriebsmotors hervorgerufen wird. In einem solchen Fall sollte nicht regelnd in den Verstellvorgang eingegriffen werden.

In einer bevorzugten Ausführungsform ist vorgesehen, daß die Auswerteeinrichtung auch Memory-, Soft-Start-/Stop und frei programmierbare Endschalterfunktionen beinhaltet. Dadurch kann jede an einem Möbel arbeitende Person stets die gleiche Stellung des Bauteils erreichen. Durch die Soft-Start-/Stop-Funktion ist ein sanftes Anlaufen und Abschalten des Verstellvorganges gegeben. Durch die frei programmierbare Endschalterfunktion können die Endstellungen jederzeit in einfachster Weise verändert werden.

Die weiteren Funktionen der Auswerteeinrichtung sind äußerst einfach konstruktiv umsetzbar und erhöhen den Bedienungskomfort.

Die Stromstärke für jeden Antriebsmotor kann in der Stromzuführung direkt durch eine entsprechende Meßeinrichtung festgestellt werden. Es ist jedoch auch denkbar, daß sie indirekt gemessen wird, indem die Drehzahl des Rotors des Antriebsmotors oder eines angeschlossenen rotierend antreibbaren Bauteils meßbar ist, und daß beim Unterschreiten einer vorgegebenen Drehzahl regelnd in den Verstellvorgang eingegriffen wird. Bei einer derartigen Feststellung entspricht eine vorgegebene Normaldrehzahl der üblichen Stromstärke in der Stromzuführung für den Motor. Wird die Drehzahl um einen bestimmten Betrag unterschritten, steigt die Stromstärke entsprechend an, so daß dies zu der Regelung führt. Die Messung der Drehzahl des Rotors des Antriebsmotors bietet dabei den Vorteil, daß die Meßgenauigkeit besonders groß ist, da im Normalfall innerhalb einer Antriebseinheit der Rotor des Antriebsmotors mit der höchsten Drehzahl angetrieben wird. Üblicherweise ist an dem Antriebsmotor ein die Drehzahl herabsetzendes Getriebe angeschlossen, so daß beispielsweise darüber angetriebene Spindeln mit einer deutlich geringeren Drehzahl rotieren als die Rotoren der Motore. Die Messung der Drehzahl des Rotors des Antriebsmotors oder eines angeschlossenen Bauteils erfolgt zweckmäßigerweise durch Stromimpulse. Die Antriebseinheit ist dann so ausgelegt, daß bei einer Umdrehung des Rotors oder eines angeschlossenen Bauteils ein oder mehrere Impulse erzeugt werden. Damit im Bedarfsfalle die zum regelnden Eingriff führende Stromstärke bzw. Drehzahl verändert werden kann, ist vorgesehen, daß die zum regelnden Eingriff führende Stromstärke bzw. Drehzahl vorzugsweise in Stufen einstellbar ist.

Insbesondere wenn die elektromotorische Antriebseinheit zur Höhenverstellung der Tischplatte eines Arbeitstisches eingesetzt wird, ist es zweckmäßig, wenn die Antriebseinheit mit mindestens zwei im Synchronlauf betriebenen Antriebsmotoren ausgestattet ist. Es ist dann eine entsprechend ausgelegte Synchronsteuerung notwendig. Beim Einsatz für einen Arbeitstisch ist es außerdem vorteilhaft, wenn je nach der Art des Arbeitstisches dieser mit wenigstens einem weiteren Antriebsmotor für Zusatzverstellbewegungen ausgestattet ist. Eine solche Zusatzverstellbewegung wäre bei einem Arbeitstisch die Neigungsverstellung der Tischplatte. Damit beim Auftreten eines Hindernisses die zu hohe Stromstärke bzw. die zu geringe Drehzahl entsprechend korrigiert wird, ist vorgesehen, daß die Antriebsmotore der Antriebseinheit drehrichtungsumkehrbare Motore sind, und daß beim Überschreiten der vorbestimmten Stromstärke bzw. beim Unterschreiten der vorbestimmten Drehzahl die Drehrichtung des jeweiligen Antriebsmotors umgekehrt wird. Der Antriebsmotor kann dann beispielsweise nach einer vorgegebenen Zeit abgeschaltet werden. Es ist jedoch auch möglich, daß das zu verstellende Bauteil in eine vorgegebene Grundstellung verfahren wird. Damit der Benutzer erkennt, warum der Verstellvorgang ab- oder unterbrochen wurde, ist es sinnvoll, wenn die Antriebseinheit mit einer Störanzeige ausgestattet ist. Diese kann optisch oder akustisch sein, in bevorzugter Ausführung ist sie jedoch in dem zur Steuerung der Antriebseinheit notwendigen Handschalter vorgesehen.

Die Synchronsteuerung für mindestens zwei Antriebsmotoren bzw. in vereinfachter Ausführung für mindestens einen Antriebsmotor ermöglicht die Funktionen Memory, Soft-Start/Stop und frei programmierbare Endschalter.

Damit ein Verlust gespeicherter Memorywerte - durch welche Ursache auch immer - vermieden wird, wird von der Steuerung regelmäßig ein festlegbarer Referenzpunkt angefahren. Diese "Referenzfahrt" kann auch von Hand ausgelöst werden, beispielsweise nach einem Stromausfall oder bei erstmaliger Einrichtung. Wesentlich hierbei ist, daß die Referenzfahrt mit einer reduzierten Geschwindigkeit ausgeführt ist, da der Referenzpunkt auch ein mechanischer Anschlag sein kann.

In weiterer Ausgestaltung ist vorgesehen, daß die Auswerteeinheit mit einem Speicher ausgerüstet ist, in den die antriebsspezifischen Werte vorzugsweise in Form einer Kurve einspeisbar sind. Der Speicher ermöglicht es, daß auch nachträglich die Kurve bzw. die Werte geändert werden können. Außerdem kann die elektromotorische Antriebseinheit zur Verstellung von unterschiedlichen Bauteilen in einfachster Weise verwendet werden, ohne daß eine spezielle Auslegung notwendig ist. Es ist ferner vorgesehen, daß mindestens zwei, vorzugsweise drei Betriebszustände des Antriebes und zumindest die Umgebungstemperatur in den Speicher der Auswerteeinheit einspeisbar sind und daß ein Abbild der einzelnen Parameter in Abhängigkeit vom zurückgelegten Weg eines Antriebsteiles bzw. vom Verstellwinkel eines Bauteiles anlegbar ist. Die Betriebszustände des Antriebes sind beispielsweise Parameter wie Motorspannung, Verfahrweg, Motortemperatur, die im Betriebszustand direkt gemessen wird, jedoch nicht indirekt berechnet wird und die dann der Auswerteeinheit zugeführt werden. Es können jedoch auch Kräfte oder Drehmomente eingegeben werden. Weiter ist vorgesehen, daß beim Probelauf des Antriebs zusammen mit den angeschlossenen Bauteilen die Werte im Leerlauf, bei mittlerer und maximaler Belastung zuzüglich der Umgebungstemperatur und weiterer definierter Randbedingungen gemessen und die Auswerteeinheit in ihrem Speicher ein Abbildung der einzelnen Parameter in Abhängigkeit vom zurückgelegten Weg des Antriebs bzw. Verstellwinkel eines Möbelteils anlegt. In weiterer Ausgestaltung ist vorgesehen, daß im Betriebszustand die aktuellen Ist-Werte der antriebsspezifischen Werte in jeweiligen Position eines Antriebsteiles mit den gespeicherten Werten vergleichbar sind. Das Vergleichsergebnis in Abhängigkeit von der Position des Antriebes ist ein Entscheidungskriterium für die Auswerteeinheit, geeignete und gezielte sowie angepaßte Eingriffe in die Steuerung der Antriebsbewegung vorzunehmen. Ferner ist noch vorgesehen, daß die Auswerteeinheit so ausgelegt ist, daß ein Verschleiß der Antriebsteile durch eine Nachlernfunktion in das Abbild einbezogen werden kann. Die Überwachung der Parameter ist nicht durch Motor-anlaufzeiten eingeschränkt, sondern sie wird ab der Betätigung sofort wirksam. Diese Überwachung erfolgt nicht nur in der Aufwärtsrichtung eines Bauteiles, sondern auch in der Abwärtsrichtung über den gesamten Weg.

Zweckmäßigerweise ist die Auswerteeinheit derart ausgelegt, daß eine Abschaltung der Antriebseinheit durchführbar ist, sofern vorgegebene Richtlinien vom Benutzer mißachtet werden. Dadurch ist ein nicht bestimmungsgemäßer Gebrauch unmöglich, so daß verhindert wird, daß durch diese unsachgemäße Behandlung die Bauteile der an den Antrieb angeschlossenen Gerätschaft vorgeschädigt werden. Dem Benutzer kann dieses angezeigt werden und z.B. bei Nichtbeachten wird der Antrieb für die normgemäße Pausenzeit abgeschaltet werden. Durch die Wegmessung wird es auch möglich, bei Überfahren eines defekten oder in einem solchen Augenblick versagenden Endschalters den Motor abzuschalten, ohne daß erst eine Stromerhöhung durch Fahren gegen einen mechanischen Anschlag mit möglichen Schäden notwendig wird. Ebenfalls können sich hiermit entlang des Verfahrweges bestimmte Referenzpunkte für eine Steuer- und/oder Regelaufgabe setzen lassen, wie z.B. Anhalten oder Umsteuern eines weiteren Motors, der gleichzeitig mitläuft. Es ist weiterhin noch vorgesehen, daß jeder Motor der Antriebseinheit zur Speicherung der antriebsspezifischen Werte mit einem nicht flüchtigen Speicherchip ausgestattet ist. Dadurch werden diese Werte beim Stromausfall erhalten. Die Auswerteeinheit kann dann den Inhalt des Speicherchips lesen, um eine optimale Anpassung von Motor, Steuerung und angeschlossener Gerätschaft zu erreichen.

Es ist ferner noch vorgesehen, daß jeder Motor der Antriebseinheit zur Weiterleitung des Körperschalls des Motors als elektrisches Signal an die Auswerteeinheit mit einem Schwingungsgeber ausgestattet ist. Dadurch können im Vergleich mit vorher gespeicherten Daten Rückschlüsse auf das Betriebsverhalten des Motor gezogen und für Eingriffe in die Steuerung verwendet werden. Denkbar ist hierbei auch eine Gebereinheit, in der gleichzeitig Schwingungs- und Temperaturgeber u.ä. Bauteile integriert sind.

Es ist bereits bekannt, aus bestimmten Parametern zu bestimmten Zeitpunkten Änderungswerte zu berechnen, die als Entscheidungskriterium zum Eingriff in die Motorsteuerung benutzt werden. So ist es auch bekannt, Geschwindigkeitswerte des Motors zu speichern, mit Ist-Werten in Abhängigkeit von der Position bestimmte Schwellwerte für bestimmte Bereiche des Verstellweges sinngemäß als Vorhersagewerte zu berechnen und diese dann mit weiteren Ist-Werten zu vergleichen, woraus sich ein Eingriff in die Steuerung des Motors ergibt.

Nachteilig hierbei ist, daß sich diese Konzepte für verstellbare Fahrzeugteile, wie Schiebedächer oder Fensterheber u.dgl. sowie auch für andere Verstellantriebe möglicherweise, jedoch nicht für die unterschiedlichen Anforderungen bei Möbelantrieben mit besonderen Hebelbetrieben und deren Eigenschaften, wie teilweise Schwergängigkeit, große Lagerspiele, extreme Anfahrkräfte usw. verwenden lassen. Weiterhin unterliegt der Einsatz der Möbelantriebe u.a. auch im Pflege- und Hospitalbereich anderen einzuhaltenden Normen. Beispielsweise kann ein Möbelantriebe häufiger benutzt werden als ein Fensterheber oder ein Schiebedach im Kfz, insbesondere da die Bedienungselemente im Bereich des Fahrers liegen und die Wahrscheinlichkeit einer ständigen Betätigung während des Fahrens äußerst gering ist.

Die hohen kurzfristigen Ströme des Motors beim Anlauf können durch geeignete Verzögerungsschaltungen unterdrückt werden, was erfahrungsgemäß bei vielen Anwendungen zu Problemen führt. Der Kraft-/Stromverlauf in Abhängigkeit vom Weg, z.B. bei einem Sessel, ist nicht linear, sondern weist auch andere lokale Maxima auf, die zu einem Abschalten führen können, was aber nicht durch äußere Blockierung hervorgerufen wird, sondern eine Systemeigenschaft ist. Wird der Abschaltwert so eingestellt, daß diese lokalen Maxima nicht zum Abschalten führen, können dazwischenliegende, durch Blockierung oder Überlastung erzeugte Stromspitzen, die unterhalb des lokalen Maximalwertes liegen, kein Abschalten hervorrufen. Ferner ist noch nachteilig bei solchen Systemen, daß Toleranzen der Bauteile bei einer kritischen Einstellung nur eines Parameters, beispielsweise des Motorstromes erfahrungsgemäß zu Fehlfunktionen führen können. Diese Maßnahmen betreffen kurzzeitige Überlastungen des Motors und der beteiligten Bauelemente. Daraus ergibt sich, daß langzeitige Überlastungen und das Nichteinhalten des bestimmungsgemäßen Gebrauchs nach für den Einsatzbereich gültigen Sicherheitsnormen nicht erfaßt wird. Durch die erfindungsgemäße Lösung können auch mehrere Antriebseinheiten miteinander verkettet werden. Sie ist beispielsweise bei einer Bettensteuerung notwendig.

Wesentlich ist bei der vorliegenden Erfindung, daß bei einem sprunghaften und deutlichen Anstieg der Stromstärke bzw. bei einer sprunghaften und deutlichen Verringerung der Drehzahl regelnd in den Verstellvorgang eingegriffen wird.

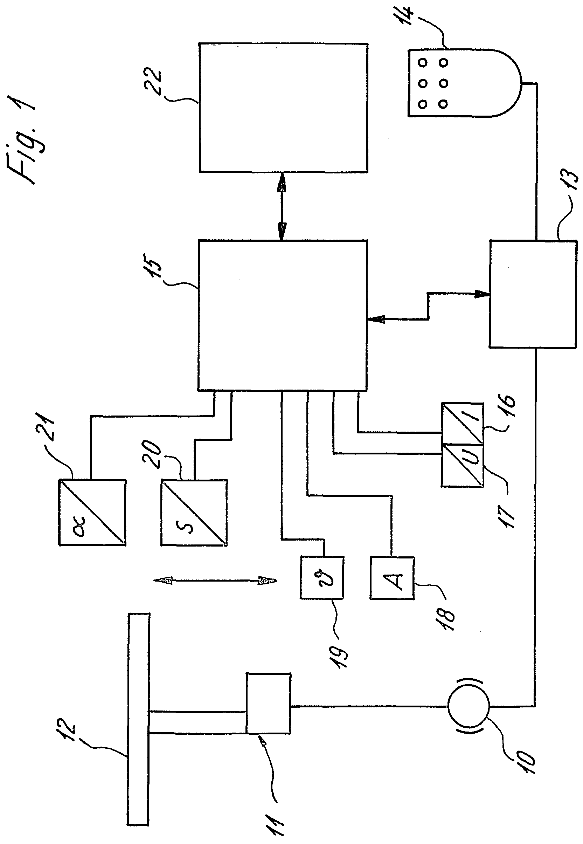

Anhand des beiliegenden Blockschaltbildes nach der Fig. 1 wird die Erfindung noch näher erläutert.

Die erfindungsgemäße elektromotorische Antriebseinheit enthält einen Motor 10, der einen Antrieb 11 antreibt. Mittels dieses Antriebes wird im dargestellten Ausführungsbeispiel eine Tischplatte 12 in ihrer Höhe verstellt. Die Steuerung des Motors 10 erfolgt durch die Steuereinheit 13, die mittels einer Handbedienvorrichtung in Form eines Handschalters 14 ansteuerbar ist. Die Handbedienvorrichtung enthält mehrere Betätigungselemente, beispielsweise Drucktaster. Es ist ferner eine Auswerteeinheit 15 vorgesehen, in die mehrere Parameter eingegeben werden, beispielsweise die Stromstärke, die Spannung, eine gemessene Kraft, eine gemessene Temperatur, ein zurückgelegter Weg oder ein Winkel. Diese Parameter sind durch die Eingaben 16 bis 21 gekennzeichnet. Die Auswerteeinheit ist außerdem noch mit einem Speicher 22 ausgestattet, in den die Werte entweder in Form von Kurven oder von Vorgabewerten einspeisbar sind.

## Patentansprüche

1. Elektromotorische Antriebseinheit (10, 11) für wenigstens ein verstellbares Bauteil (12) eines Möbels, die mit wenigstens einem mittels einer Steuereinheit (13) steuerbaren Antriebsmotor (10) und einer Auswerteeinheit ausgestattet ist, der Antriebsmotor (10) oder bestimmte Antriebsmotoren jeweils eine Messeinrichtung zur Messung der vom jeweiligen Antriebsmotor (10) aufgenommenen Stromstärke und/oder der vom jeweiligen Antriebsmotor abgegebenen Drehzahl aufweisen,
**dadurch gekennzeichnet, dass** die Auswerteeinheit (15) derart vorgesehen ist, dass beim Abweichen eines Stromstärke- oder Drehzahlwertes von einem vorgegebenen Wert regelnd derart in den Verstellvorgang eingegriffen wird, dass der Verstellvorgang abgebrochen, unterbrochen oder für die Dauer einer vorgegebenen Zeit umgekehrt wird.

2. Elektromotorische Antriebseinheit nach Anspruch 1, **dadurch gekennzeichnet, dass** die Auswerteeinheit (15) eine Memory-, Soft-Start-/Stop- und frei programmierbare Endschalterfunktion beinhaltet.

3. Elektromotorische Antriebseinheit nach Anspruch 1 oder 2, **dadurch gekennzeichnet, dass** die Auswerteeinheit (15) mit einem Speicher (22) ausgerüstet ist, in den die antriebsspezifischen Werte, vorzugsweise in Form einer Kurve einspeisbar sind.

4. Elektromotorische Antriebseinheit nach Anspruch 1, **dadurch gekennzeichnet, dass** die Drehzahl des Rotors des Antriebsmotors (10) oder eines angeschlossenen, rotierend antreibbaren Bauteils messbar ist, und dass beim Unterschreiten einer vorgegebenen Drehzahl mit einem entsprechenden Anstieg der Stromstärke in der Stromzuführung regelnd in den Verstellweg eingreifbar ist.

5. Elektromotorische Antriebseinheit nach Anspruch 4, **dadurch gekennzeichnet, dass** die Drehzahl des Rotors des Antriebsmotors (10) oder des angeschlossenen Bauteils in zählbare Stromimpulse umsetzbar ist.

6. Elektromotorische Antriebseinheit nach einem oder mehreren der vorhergehenden Ansprüche 1 bis 5, **dadurch gekennzeichnet, dass** die zum regelnden Eingriff in den Verstellvorgang führende Stromstärke bzw. Drehzahl in Stufen einstellbar ist.

7. Elektromotorische Antriebseinheit nach einem oder mehreren der vorhergehenden Ansprüche 1 bis 6, **dadurch gekennzeichnet, dass** die Antriebseinheit mit wenigstens zwei im Synchronlauf betreibbaren Antriebsmotore (10) ausgestattet ist.

8. Elektromotorische Antriebseinheit nach einem oder mehreren der vorhergehenden Ansprüche 1 bis 7, **dadurch gekennzeichnet, dass** die elektromotorische Antriebseinheit mit wenigstens einem weiteren Antriebsmotor für Zusatzverstellbewegungen ausgestattet ist.

9. Elektromotorische Antriebseinheit nach einem oder mehreren der vorhergehenden Ansprüche, **dadurch gekennzeichnet, dass** von der Steuereinheit (13) in vorgegebenen Zeitabständen ein festgelegter Referenzpunkt anfahrbar ist.

10. Elektromotorische Antriebseinheit nach Anspruch 9, **dadurch gekennzeichnet, dass** beim Anfahren des Referenzpunktes die Funktionen von Hand auslösbar sind.

11. Elektromotorische Antriebseinheit nach Anspruch 9 oder 10, **dadurch gekennzeichnet, dass** die Funktionen mit gegenüber der Normalgeschwindigkeit verminderter Geschwindigkeit durchführbar sind.

12. Elektromotorische Antriebseinheit nach einem oder mehreren der vorhergehenden Ansprüche, **dadurch gekennzeichnet, dass** mindestens zwei, vorzugsweise drei Betriebszustände der Antriebseinheit und zumindest die Umgebungstemperatur in den Speicher (22) der Auswerteeinheit (15) speicherbar sind, und dass ein Abbild der einzelnen Parameter in Abhängigkeit vom zurückgelegten Weg eines Antriebsteiles bzw. vom Verstellwinkel eines Bauteiles anlegbar ist.

13. Elektromotorische Antriebseinheit nach Anspruch 12, **dadurch gekennzeichnet, dass** im Betriebszustand der elektromotorischen Antriebseinheit die aktuellen Ist-Werte der antriebsspezifischen Werte in der jeweiligen Position eines Antriebsteiles mit den gespeicherten Werten vergleichbar sind.

14. Elektromotorische Antriebseinheit nach einem oder mehreren der vorhergehenden Ansprüche 1 bis 13, **dadurch gekennzeichnet, dass** die Auswerteeinheit (15) derart ausgelegt ist, dass eine Abschaltung der Antriebseinheit durchführbar ist, sofern vorgegebene Richtlinien vom Benutzer missachtet worden sind.

15. Elektromotorische Antriebseinheit nach einem oder mehreren der vorhergehenden Ansprüche 1 bis 14, **dadurch gekennzeichnet, dass** jeder Motor (10) der Antriebseinheit zur Speicherung der antriebsspezifischen Werte mit einem nicht flüchtigen Speicherchip ausgestattet ist.

16. Elektromotorische Antriebseinheit nach einem oder mehreren der vorhergehenden Ansprüche 1 bis 15, **dadurch gekennzeichnet, dass** jeder Motor (10) der Antriebseinheit zur Weiterleitung des Körperschalls des Motors (10) als elektrisches Signal an die Auswerteeinheit (15) mit einem Schwingungsgeber ausgestattet ist.

## Claims

1. An electromotive drive unit (10, 11) for at least one adjustable component (12) of a piece of furniture, which is provided with at least one drive motor (10), which can be controlled by means of a control unit (13), and an evaluation unit, the drive motor (10) or specific drive motors respectively comprise a measuring device for measuring the current strength drawn by the respective drive motor (10) and/or the revolution speed produced by the respective drive motor,
**characterized in that** the evaluation unit (15) is provided in such a way that in the case of a deviation of a current-strength or revolution speed value from a predetermined value a controlling intervention is made in the adjusting process in such a way that the adjusting process is terminated, interrupted or reversed for the duration of a predetermined period of time.

2. An electromotive drive unit according to claim 1, **characterized in that** the evaluation unit (15) contains a memory-, soft-start/stop- and freely programmable limit switch function.

3. An electromotive drive unit according to claim 1 or 2, **characterized in that** the evaluation unit (15) is provided with a memory (22) into which the drive-specific values, preferably in form of a curve, can be fed.

4. An electromotive drive unit according to claim 1, **characterized in that** the revolution speed of the rotor of the drive motor (10) or a connected, rotatably driveable component can be measured, and a controlled intervention can be made in the adjusting path in the case of a drop beneath a predetermined revolution speed with a respective rise in the current strength in the power supply.

5. An electromotive drive unit according to claim 4, **characterized in that** the revolution speed of the rotor of the drive motor (10) or the connecting component can be converted into countable current pulses.

6. An electromotive drive unit according to one or several of the preceding claims 1 to 5, **characterized in that** the current strength or revolution speed which leads to the controlling intervention in the adjusting process is adjustable in steps.

7. An electromotive drive unit according to one or several of the preceding claims 1 to 6, **characterized in that** the drive unit is provided with at least two drive motors (10) which are operated in synchronous running.

8. An electromotive drive unit according to one or several of the preceding claims 1 to 7, **characterized in that** the electromotive drive unit is provided with at least one further drive motor for additional adjusting movements.

9. An electromotive drive unit according to one or several of the preceding claims, **characterized in that** a fixed reference point can be accessed by the control unit (13) in predetermined time intervals.

10. An electromotive drive unit according to claim 9, **characterized in that** the functions can be triggered manually when accessing the reference point.

11. An electromotive drive unit according to claim 9 or 10, **characterized in that** the functions can be carried out at a speed which is reduced in comparison with normal speed.

12. An electromotive drive unit according to one or several of the preceding claims, **characterized in that** at least two, preferably three, operating states of the drive unit and at least the ambient temperature can be stored in the memory (22) of the evaluation unit (15), and an image of the individual parameters can be applied depending on the distance travelled by a drive part or on the adjustment angle of a component.

13. An electromotive drive unit according to claim 12, **characterized in that** in the operating state of the electromotive drive unit the current actual values of the drive-specific values in the respective position of a drive part can be compared with the stored values.

14. An electromotive drive unit according to one or several of the preceding claims 1 to 13, **characterized in that** the evaluation unit (15) is formed in such a way that a deactivation of the drive unit can be carried out if predetermined guidelines have been disregarded by the user.

15. An electromotive drive unit according to one or several of the preceding claims 1 to 14, **characterized in that** each motor (10) of the drive unit is provided for storing the drive-specific values with a non-volatile memory chip.

16. An electromotive drive unit according to one or several of the preceding claims 1 to 15, **characterized in that** each motor (10) of the drive unit is provided with a vibration pickup for conducting the structure-borne sound of the motor (10) as an electrical signal to the evaluation unit (15).

## Revendications

1. Unité d'entraînement électro-motorisée (10, 11) destinée à au moins un élément réglable (12) d'un meuble et équipée d'au moins un moteur d'entraînement (10) pouvant être commandé au moyen d'une unité d'entraînement (13) ainsi que d'une unité d'exploitation, le moteur d'entraînement (10) ou des moteurs d'entraînement déterminés comportant respectivement un dispositif de mesure pour permettre de mesurer l'intensité de courant absorbé par le moteur d'entraînement respectif (10) et/ou la vitesse de rotation délivrée par le moteur d'entraînement respectif,
**caractérisée en ce que**
l'unité d'exploitation (15) est réalisée de sorte que, lorsque la valeur de l'intensité du courant ou de la vitesse de rotation s'écarte d'une valeur prédéfinie, elle agisse de façon régulée sur le processus de réglage de sorte que le processus de réglage soit interrompu ou inversé pendant une durée prédéfinie.

2. Unité d'entraînement électro-motorisée conforme à la revendication 1,
**caractérisée en ce que**
l'unité d'exploitation (15) comprend une fonction de mémoire, de marche / arrêt douce et de commutation de fin de course librement programmable.

3. Unité d'entraînement électro-motorisée conforme à la revendication 1 ou 2,
**caractérisée en ce que**
l'unité d'exploitation (15) est équipée d'une mémoire (22) dans laquelle peuvent être enregistrées des valeurs spécifiques à l'entraînement, de préférence sous la forme d'une courbe.

4. Unité d'entraînement électro-motorisée conforme à la revendication 1,
**caractérisée en ce que**
la vitesse de rotation du rotor du moteur d'entraînement (10) ou d'un élément pouvant être entraîné en rotation connecté à celui-ci peut être mesurée, et, lorsque la vitesse de rotation devient inférieure à une vitesse de rotation prédéfinie, on peut agir de façon régulée sur la course de réglage par une augmentation correspondante de l'intensité de courant dans l'alimentation en courant.

5. Unité d'entraînement électro-motorisée conforme à la revendication 4,
**caractérisée en ce que**
la vitesse de rotation du rotor du moteur d'entraînement (10) ou de l'élément connecté à celui-ci peut être transformée en impulsions de courant pouvant être comptées.

6. Unité d'entraînement électro-motorisée conforme à l'une ou à plusieurs des revendications précédentes 1 à 5,
**caractérisée en ce que**
l'intensité du courant ou la vitesse de rotation conduisant à une action régulée sur le processus de réglage peut être réglée par étapes.

7. Unité d'entraînement électro-motorisée conforme à l'une ou à plusieurs des revendications précédentes 1 à 6,
**caractérisée en ce qu'**
elle est équipée d'au moins deux moteurs d'entraînement (10) pouvant être actionnés en synchronisme.

8. Unité d'entraînement électro-motorisée conforme à l'une ou à plusieurs des revendications précédentes 1 à 7,
**caractérisée en ce qu'**
elle est équipée d'au moins un autre moteur d'entraînement pour permettre d'effectuer des mouvements de réglage supplémentaires.

9. Unité d'entraînement électro-motorisée conforme à l'une ou à plusieurs des revendications précédentes,
**caractérisée en ce qu'**
un point de référence déterminé peut être démarré par l'unité d'entraînement (13) dans des intervalles de temps prédéfinis.

10. Unité d'entraînement électro-motorisée conforme à la revendication 9,
**caractérisée en ce que**
lors du démarrage du point de référence les fonctions peuvent être déclenchées manuellement.

11. Unité d'entraînement électro-motorisée conforme à la revendication 9 ou 10,
**caractérisée en ce que**
les fonctions peuvent être exécutées avec une vitesse diminuée par rapport à la vitesse normale.

12. Unité d'entraînement électro-motorisée conforme à l'une ou à plusieurs des revendications précédentes 1 à 7,
**caractérisée en ce que**
l'on peut enregistrer dans la mémoire (22) de l'unité d'exploitation (15) au moins deux, de préférence trois états de fonctionnement de l'unité d'entraînement et au moins la température environnante, et une représentation des différents paramètres peut être établie en fonction de la course parcourue par un élément d'entraînement ou de l'angle de réglage d'un composant.

13. Unité d'entraînement électro-motorisée conforme à la revendication 12,
**caractérisée en ce que**
dans des états de fonctionnement de l'unité d'entraînement électro-motorisée les valeurs réelles actuelles des valeurs spécifiques à l'entraînement dans chacune des positions d'un élément d'entraînement peuvent être comparées aux valeurs enregistrées.

14. Unité d'entraînement électro-motorisée conforme à l'une ou à plusieurs des revendications précédentes 1 à 13,
**caractérisée en ce que**
l'unité d'exploitation (15) est réalisée de façon à pouvoir effectuer une coupure de l'unité d'entraînement dans la mesure où des directives n'ont pas été respectées par l'utilisateur.

15. Unité d'entraînement électro-motorisée conforme à l'une ou à plusieurs des revendications précédentes 1 à 14,
**caractérisée en ce que**
chacun des moteurs (10) de l'unité d'entraînement est équipé pour enregistrer des valeurs spécifiques à l'entraînement avec une puce de mémoire non volatile.

16. Unité d'entraînement électro-motorisée conforme à l'une ou à plusieurs des revendications précédentes 1 à 15,
**caractérisée en ce que**
chacun des moteurs (10) de l'unité d'entraînement est équipé d'un émetteur d'oscillations pour permettre de transmettre les bruits de structure du moteur (10) en tant que signal électrique à l'unité d'exploitation (15).
